# FASCICULE DE BREVET EUROPEEN

(11) **EP 2 898 800 B1**
(45) Date de publication et mention de la délivrance du brevet: **14.08.2019**
(21) Numéro de dépôt: 15150124.4
(22) Date de dépôt: 05.01.2015
(51) Int. Cl.: A47J 27/08

(54) **Système de cuisson modulaire et procédé afférent**
Modulares Kochsystem und entsprechendes Verfahren
Modular cooking system and related method

(30) Priorité: 07.01.2014 FR 1450103
(43) Date de publication de la demande: 29.07.2015
(73) Titulaire: SEB S.A., 69130 Ecully (FR)
(72) Inventeur: Baraille, Eric, Laurent, 21121 Fontaine les Dijon (FR); Decroze, Nicolas, 69007 Lyon (FR)
(74) Mandataire: Soares, Luis Filipe

(56) Documents cités:
- EP-A1- 2 002 765
- WO-A1-2013/064348
- US-A1- 2013 249 698

## Description

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein.

La présente invention concerne plus particulièrement un système domestique de cuisson d'aliments comprenant un autocuiseur pourvu d'une soupape de régulation de pression conçue pour maintenir la pression régnant dans l'autocuiseur sensiblement à une valeur de consigne.

La présente invention concerne par ailleurs un procédé domestique de cuisson d'aliments au moyen d'un autocuiseur pourvu d'une soupape de régulation de pression conçue pour maintenir la pression régnant dans l'autocuiseur sensiblement à une valeur de consigne.

Les autocuiseurs domestiques sont bien connus. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche. Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Le fonctionnement de ces autocuiseurs connus est gouverné par différents organes, tels que par exemple :
- un moyen de verrouillage / déverrouillage capable d'assurer le verrouillage et le déverrouillage du couvercle relativement à la cuve,
- une soupape de régulation de pression permettant de maintenir la pression dans l'enceinte à un niveau prédéterminé de consigne (éventuellement réglable s'il s'agit d'une soupape tarée à tarage réglable) appelé pression de fonctionnement,
- ou encore un organe de décompression, permettant de faire chuter la pression au sein de l'enceinte, notamment en fin de processus de cuisson, pour que l'utilisateur puisse ouvrir le couvercle dans des conditions de sécurité acceptables.

Chacune de ces fonctions peut être commandée par l'utilisateur grâce à un ou plusieurs moyens de commande correspondant destinés à être actionnés manuellement par l'utilisateur.

On connaît en particulier un appareil de cuisson sous pression doté d'un bouton de commande permettant à l'utilisateur de commander manuellement la décompression de l'enceinte de cuisson, ainsi que le réglage du tarage de la soupape de régulation en fonction notamment de la nature des aliments à cuire. Dans cet autocuiseur connu, le bouton de commande en question est ainsi monté mobile entre cinq positions, savoir :
- une première position correspondant au déclenchement de la décompression de l'enceinte de cuisson ;
- une deuxième position correspondant à un premier niveau de consigne de pression, adapté à la cuisson de légumes ;
- une troisième position correspondant à un deuxième niveau de consigne de pression, adapté à la cuisson de féculents ;
- une quatrième position correspondant à une troisième valeur de consigne de pression adaptée à la cuisson de viandes ;
- et une cinquième position correspondant à une quatrième valeur de consigne de pression particulièrement adaptée à la cuisson de poissons.

A ce bouton de commande viennent s'ajouter des organes de commande du verrouillage / déverrouillage du couvercle relativement à la cuve et un minuteur programmable dont le déclenchement est piloté par un capteur de température.

Compte tenu de ce qui précède, l'utilisation d'un tel autocuiseur peut apparaître de prime abord relativement complexe, rébarbative et / ou anxiogène pour un utilisateur normalement averti, qui souhaite utiliser un tel autocuiseur dans un contexte domestique.

La relative complexité de pilotage d'un tel autocuiseur, qui permet par ailleurs d'obtenir, lorsqu'il est correctement utilisé, des résultats de cuisson tout à fait remarquables, tant sur le plan organoleptique que nutritionnel, conduit au risque de voir l'utilisateur être incapable d'utiliser l'autocuiseur de façon optimale et de tirer pleinement partie de tous ses avantages.

Il pourrait être envisageable, afin de surmonter cet inconvénient, de doter l'autocuiseur d'un système de pilotage électronique permettant, par exemple au moyen d'un écran d'affichage, d'améliorer l'ergonomie d'utilisation de l'autocuiseur en rendant le fonctionnement de ce dernier plus intuitif.

On pourrait par exemple envisager de recourir à une application d'assistance à l'utilisation, mise en oeuvre sur un ordiphone (en anglais : « *smartphone* »), compte tenu de la popularité de ce genre d'appareils dont disposent de très nombreux consommateurs.

Une telle idée, séduisante de prime abord, s'avère toutefois très délicate à mettre en oeuvre en pratique, compte tenu de la spécificité des autocuiseurs (qui sont des dispositifs pressurisés qui doivent répondre à des exigences strictes en matière de sécurité) et de leur caractère grand public qui induit des contraintes très spécifiques en matière d'industrialisation et de commercialisation.

En particulier, il apparaît indispensable que l'autocuiseur puisse être utilisé aisément et de façon tout à fait sûre et relativement ergonomique, même en l'absence d'ordiphone (quelle que soit la cause de cette absence, qui peut notamment résulter d'une éventuelle indisponibilité due à un défaut de charge des batteries par exemple).

On connaît par ailleurs du document EP-2 002 765 A1 une cocotte-minute avec un plongeur d'affichage de pression dont le mouvement est transmis sans contact à une horloge pour surveiller le temps de cuisson. On connaît également du document WO-2013/064348 A1 une unité associée à un appareil de cuisson et capable de détecter et transmettre un paramètre à une unité secondaire distante.

Les objets assignés à l'invention visent en conséquence à répondre à la problématique exposée en ce qui précède tout en portant remède aux divers inconvénients énumérés ci-avant, et à proposer à cet effet un nouveau système domestique de cuisson d'aliments qui tout en étant de conception particulièrement simple, évolutive et bon marché est d'utilisation intuitive, ergonomique et sûre.

Un autre objet de l'invention vise à proposer un nouveau système domestique de cuisson d'aliments de construction simple et robuste.

Un autre objet de l'invention vise à proposer un nouveau système domestique de cuisson d'aliments qui peut être utilisé de façon fiable en toutes circonstances.

Un autre objet de l'invention vise à proposer un nouveau système domestique de cuisson d'aliments qui permet à l'utilisateur de mettre en oeuvre de façon rapide et intuitive, mais purement optionnelle, une assistance à l'utilisation particulièrement avancée.

Un autre objet de l'invention vise à proposer un nouveau système domestique de cuisson d'aliments qui peut de façon extrêmement simple être utilisé selon deux modes d'utilisation différents, à savoir un mode entièrement autonome et un mode *« assisté par ordinateur ».*

Un autre objet de l'invention vise à proposer un nouveau système domestique de cuisson d'aliments dont la construction est particulièrement compacte et fiable.

Un autre objet de l'invention vise à proposer un nouveau système domestique de cuisson d'aliments qui met en oeuvre un minimum de pièces différentes.

La présente demande décrit également un module de télécommunication permettant d'améliorer l'ergonomie et la sécurité d'utilisation d'un autocuiseur de façon très simple et intuitive.

Un autre objet de l'invention vise également à proposer un nouveau procédé domestique de cuisson d'aliments qui permet de façon extrêmement simple à l'utilisateur de choisir entre deux modes d'utilisation d'un autocuiseur classique, qui diffèrent par leur degré d'ergonomie et d'assistance apportées à l'utilisateur.

Les objets assignés à l'invention sont atteints à l'aide d'un système domestique de cuisson d'aliments comprenant un autocuiseur pourvu d'une soupape de régulation de pression conçue pour maintenir la pression régnant dans l'autocuiseur sensiblement à une valeur de consigne, ledit système étant caractérisé en ce qu'il comprend également un module de télécommunication et un module de minuterie indépendants, lesdits autocuiseur, module de télécommunication et module de minuterie comportant des moyens d'attache complémentaires permettant d'attacher alternativement et de façon amovible à l'autocuiseur lesdits module de télécommunication et module de minuterie, ledit module de télécommunication étant capable, lorsqu'il est attaché audit autocuiseur, de transmettre à un terminal informatique indépendant, par une liaison sans fil, au moins un signal relatif au fonctionnement dudit autocuiseur, tandis que ledit module de minuterie est capable, lorsqu'il est attaché audit autocuiseur, de décompter une durée prédéterminée à compter de l'instant où la pression régnant dans l'autocuiseur atteint sensiblement ladite valeur de consigne pour la première fois.

Les objets assignés à l'invention sont enfin atteints à l'aide d'un procédé domestique de cuisson d'aliments au moyen d'un autocuiseur pourvu d'une soupape de régulation de pression conçue pour maintenir la pression régnant dans l'autocuiseur sensiblement à une valeur de consigne, caractérisé en ce qu'il comprend une étape dans laquelle un module de télécommunication et un module de minuterie indépendants sont tour à tour attachés de façon amovible audit autocuiseur, ledit module de télécommunication étant capable, lorsqu'il est attaché audit autocuiseur, de transmettre à un terminal informatique indépendant, par une liaison sans fil, au moins un signal relatif au fonctionnement dudit autocuiseur, tandis que ledit module de minuterie est capable, lorsqu'il est attaché audit autocuiseur, de décompter une durée prédéterminée à compter de l'instant où la pression régnant dans l'autocuiseur atteint sensiblement ladite valeur de consigne pour la première fois.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue schématique en perspective, un système domestique de cuisson d'aliments conforme à l'invention, incluant d'une part l'autocuiseur et d'autre part un module de télécommunication et un module de minuterie indépendants, lesdits modules étant représentés alors qu'ils sont détachés de l'autocuiseur.
- La figure 2 illustre un détail agrandi de la figure 1.

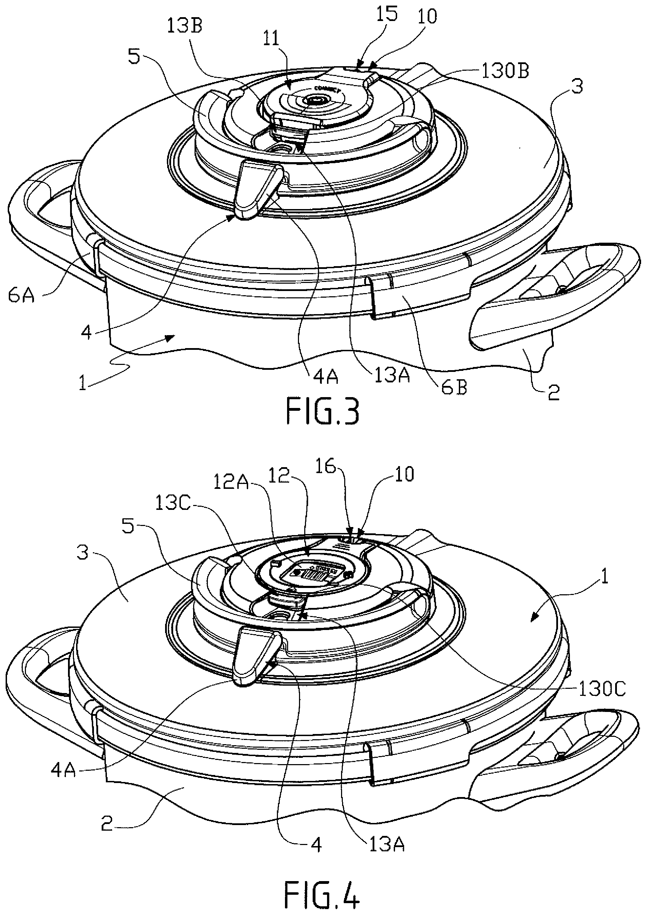

- La figure 3 illustre l'autocuiseur des figures 1 et 2 avec le module de télécommunication des figures 1 et 2 attaché audit autocuiseur.
- La figure 4 est une vue sensiblement similaire à celle de la figure 3, à la différence près que c'est le module de minuterie qui est cette fois attaché à l'autocuiseur, en lieu et place du module de télécommunication.

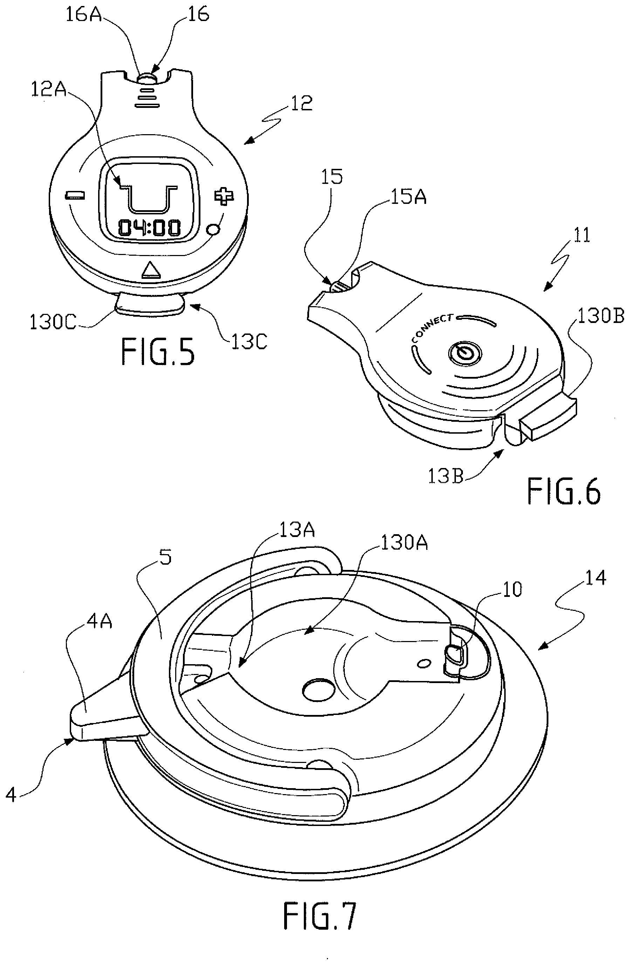

- La figure 5 illustre le module de minuterie seul.
- La figure 6 illustre le module de télécommunication seul.
- La figure 7 illustre un détail de réalisation de l'autocuiseur des figures précédentes, consistant en un sous-ensemble unitaire destiné à être fixé au couvercle et formant un logement creux destiné à recevoir indifféremment et alternativement le module de télécommunication et le module de minuterie.

L'invention concerne un système domestique de cuisson d'aliments, c'est-à-dire un système destiné à cuire des aliments dans un contexte familial, qui ne relève donc notamment pas de la restauration collective.

Le système domestique de cuisson d'aliments conforme à l'invention comprend un autocuiseur 1 destiné à assurer la cuisson des aliments sous pression de vapeur. L'autocuiseur 1 est bien entendu en l'espèce un autocuiseur domestique, ce qui suppose en particulier qu'il forme un ustensile de cuisine présentant un caractère portatif (c'est-à-dire déplaçable manuellement) et indépendant. Avantageusement, l'autocuiseur 1 conforme à l'invention est passif thermiquement, c'est-à-dire qu'il est conçu pour monter en pression sous l'effet d'une source de chauffe qui lui est extérieure, telle qu'une plaque de cuisson. Il est cependant tout à fait envisageable, sans pour autant que l'on sorte du cadre de l'invention, que la source de chauffe fasse partie de l'autocuiseur 1 (comme c'est le cas pour les autocuiseurs électriques).

Comme cela est bien connu en tant que tel, l'autocuiseur 1 conforme à l'invention comprend une cuve 2 formant un récipient de cuisson et présentant avantageusement sensiblement une symétrie de révolution selon un axe vertical central. La cuve 2 est par exemple, et de manière classique, fabriquée par emboutissage d'un flanc en matériau métallique tel que l'aluminium ou l'acier inoxydable. Un fond thermo-conducteur 2A peut avantageusement être rapporté, par exemple par frappe à chaud, sur le fond du récipient obtenu par emboutissage, afin de former une cuve 2 équipée d'un fond thermo-conducteur.

L'autocuiseur 1 conforme à l'invention comprend également un couvercle 3 destiné à être associé à la cuve 2 pour former avec cette dernière une enceinte de cuisson au sein de laquelle la pression est capable d'atteindre une valeur de consigne (régulée par une soupape de régulation, comme exposée ci-après) supérieure à la pression atmosphérique. L'enceinte de cuisson est donc sensiblement étanche, c'est-à-dire suffisamment hermétique pour permettre une montée en pression significative en son sein, par exemple à un niveau (valeur de consigne) excédant la pression atmosphérique d'une valeur comprise entre 4 kPa et 150 kPa. Le couvercle 3 est avantageusement réalisé en un matériau métallique (par exemple en acier inoxydable) et affecte préférentiellement une forme générale discoïde, complémentaire de la forme de la cuve 2 à laquelle il est associé pour former l'enceinte de cuisson.

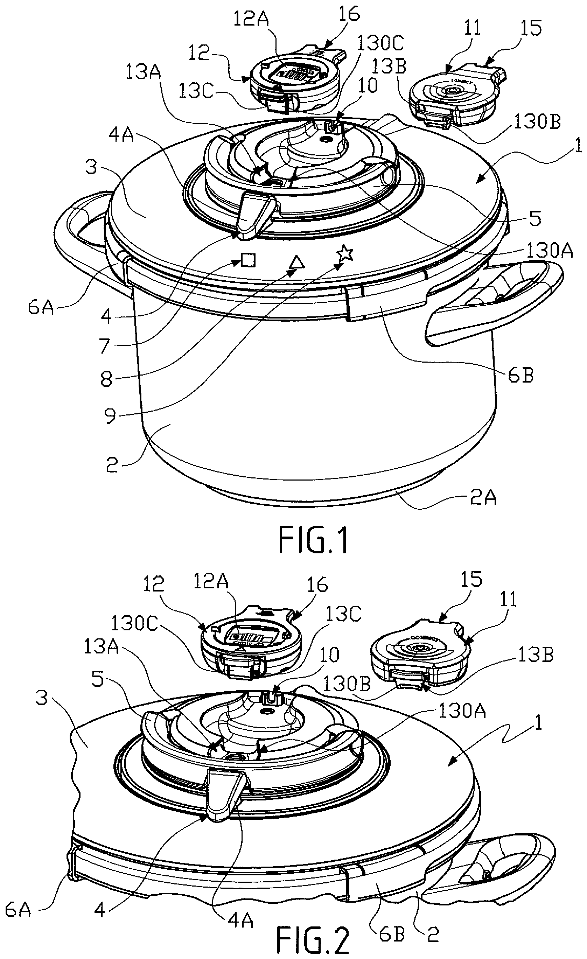

Le couvercle 3 est conçu pour être verrouillé / déverrouillé à volonté relativement à la cuve 2, le verrouillage du couvercle 3 permettant à l'enceinte de monter en pression sans échappement du couvercle 3 sous l'effet de la pression interne à l'autocuiseur. A cette fin, l'autocuiseur 1 comprend un moyen de verrouillage / déverrouillage du couvercle 3 sur la cuve 2, qui peut être de l'espèce de tout type connu de l'homme du métier (système de verrouillage à étrier, à baïonnettes, à mâchoires, à segments, etc.). Le moyen de verrouillage / déverrouillage peut de façon classique être susceptible d'évoluer entre une configuration de verrouillage du couvercle 3 relativement à la cuve 2 dans laquelle le couvercle 3 est solidarisé à la cuve 2 de façon à autoriser la montée en pression (illustrée à la figure 1), et une configuration de déverrouillage (non illustrée) du couvercle 3 relativement à la cuve 2 dans laquelle le couvercle 3 peut être librement séparé de la cuve 2, de façon manuelle par l'utilisateur.

L'autocuiseur 1 du système selon l'invention comprend, comme cela est bien connu en tant que telle, une soupape de régulation de pression, qui est de préférence montée sur le couvercle 3 (et même embarquée sur ce dernier), et est conçue pour maintenir la pression régnant dans l'autocuiseur 1 (c'est-à-dire dans l'enceinte de cuisson formée par l'association de la cuve 2 et du couvercle 3) sensiblement à une valeur de consigne, appelée communément « *pression de fonctionnement » ou « pression de régulation* », et excédant par exemple la pression atmosphérique d'une valeur comprise entre 4 kPa et 150 kPa, et de préférence comprise entre 15 et 150 kPa.

La soupape de régulation est avantageusement conçue pour être sensible à la pression régnant dans l'enceinte de cuisson, et être mobile entre au moins une première position dans laquelle elle ferme la communication de l'enceinte vers l'extérieur tant que la pression interne est inférieure ou égale à une pression prédéterminée P₀ correspondant à la valeur de consigne et une deuxième position dans laquelle elle met en communication l'intérieur de l'enceinte avec l'extérieur dès que la pression interne dépasse sensiblement la pression prédéterminée P₀. La soupape de régulation permet ainsi de maintenir la pression à un seuil prédéterminé P₀ (qui correspond à la valeur de consigne), valeur au-delà de laquelle la soupape assure une fuite de vapeur régulant la pression interne de l'autocuiseur.

La soupape de régulation pourra être de tout type connu de l'homme du métier, et être par exemple formée par une soupape à poids ou à ressort de compression, montée mobile sur le couvercle. Ladite soupape de régulation peut occuper une position inférieure d'étanchéité (position d'obturation) dans laquelle elle est rappelée sous l'effet de son propre poids (ou sous l'effet de la force de rappel exercée par le ressort de compression) sur un siège ménagé à travers un perçage lui-même réalisé à travers le couvercle 3. La soupape peut également être repoussée dans une position haute sous l'effet de la pression interne régnant dans l'autocuiseur, lorsque cette dernière dépasse la valeur prédéterminée P₀ de fonctionnement. Dans cette position, la soupape s'élève et dégage l'orifice ménagé à travers le couvercle et par lequel la vapeur peut s'échapper vers l'extérieur.

Avantageusement, l'autocuiseur 1 comprend un conduit d'échappement de vapeur 10, par lequel ladite soupape de régulation autorise la vapeur à s'échapper hors de l'autocuiseur 1 dès que la pression régnant au sein de l'autocuiseur excède ladite valeur de consigne. A cette fin, le conduit 10 est avantageusement monté à l'aval de la soupape de régulation relativement au sens d'échappement de la vapeur, de sorte que ladite soupape est interposée entre le perçage ménagé à travers le couvercle 3 et le conduit d'échappement. Ainsi, lorsque la pression régnant au sein de l'autocuiseur 1 dépasse la valeur de consigne, la soupape s'élève (à l'encontre de son propre poids et / ou de la force de rappel exercée par un éventuel ressort de compression) et dégage le perçage ménagé à travers le couvercle 3, à travers lequel la vapeur peut s'échapper pour emprunter ensuite le conduit d'échappement 10 qui la canalisera jusqu'à l'extérieur de l'autocuiseur 1.

Tel que cela est bien connu en soi de l'homme du métier, la soupape de régulation de pression peut être avantageusement une soupape tarée à tarage réglable, permettant à l'utilisateur de sélectionner une valeur de consigne prédéterminée (pression de fonctionnement P₀) parmi un choix de plusieurs valeurs prédéterminées en fonction du type d'aliments présents dans l'autocuiseur. De préférence, la soupape de régulation est ainsi équipée d'un système de tarage formé par un ressort de compression qui exerce sur la soupape une force de rappel en position d'obturation plus ou moins importante, et qui peut être réglée en comprimant plus ou moins le ressort, tel que cela est bien connu en tant que tel.

L'autocuiseur 1 du système conformément à l'invention est pourvu par ailleurs d'au moins un organe de commande manuel 4 mobile entre une pluralité de positions correspondant respectivement à une pluralité d'états de fonctionnement dudit autocuiseur 1. En d'autres termes, l'organe de commande manuel 4 permet à l'utilisateur de piloter une ou plusieurs des fonctions de l'autocuiseur 1, comme par exemple à titre purement illustratif et non limitatif, la décompression de l'enceinte de cuisson et / ou le réglage du niveau de pression de fonctionnement et / ou le verrouillage / déverrouillage du couvercle 3 relativement à la cuve 2, etc.

Dans l'exemple illustré aux figures, l'autocuiseur 1 comprend plusieurs organes de commande manuels incluant en particulier un organe de commande manuel 4 permettant à l'utilisateur de commander manuellement à la fois la décompression de l'autocuiseur 1 et le réglage du niveau de pression de fonctionnement. Le verrouillage / déverrouillage du couvercle 3 relativement à la cuve 2 est quant à lui commandé par un autre organe de commande 5 manuel, formé en l'espèce par une anse rotative conçue pour contrôler le déplacement radial de mâchoires de verrouillage 6A, 6B relativement au couvercle 3.

Les positions prédéterminées susceptibles d'être adoptées par l'organe de commande manuel 4 sont chacune associées à des marquages d'identification respectifs 7, 8, 9 (cf. figure 1) positionnés sur l'autocuiseur 1, par exemple à la surface du couvercle 3 (de façon à être parfaitement visible par l'utilisateur) selon une disposition prédéterminée. Les marquages d'identification 7, 8, 9 sont conçus pour permettre à l'utilisateur d'identifier, directement ou indirectement, quelle fonction est associée à quelle position de l'organe de commande manuel 4. Par exemple, dans le mode de réalisation de la figure 1, un premier marquage d'identification 7 correspond à la décompression de l'appareil, tandis que des deuxième et troisième marquages d'identification 8, 9 correspondent respectivement à deux niveaux de pression de fonctionnement (valeurs de consigne) différents. Chaque marquage d'identification 7, 8, 9 est avantageusement constitué d'un pictogramme qui symbolise la fonction associée à la position concernée de l'organe de commande manuel 4. Afin de permettre une utilisation aisée et intuitive de l'autocuiseur 1, les positions susceptibles d'être adoptées par l'organe de commande manuel 4 sont des positions prédéterminées séparées par une distance et / ou un secteur angulaire constant(s). Les marquages d'identification respectifs correspondant 7, 8, 9 sont quant à eux avantageusement disposés de façon fixe sur l'autocuiseur 1, et de préférence à la surface du couvercle 3, c'est-à-dire que la position desdits marquages d'identification 7, 8, 9 relativement au couvercle 3 est fixe. Au contraire, l'organe de commande manuel 4 est avantageusement embarqué sur le couvercle 3 tout en étant mobile relativement à ce dernier entre les différentes positions susvisées.

L'organe de commande manuel 4 inclut avantageusement un organe de préhension destiné à être déplacé manuellement par l'utilisateur entre les différentes positions susvisées, et un organe de pointage qui pointe vers le marquage d'identification correspondant à la position prédéterminée instantanée dans laquelle se trouve l'organe de commande manuel 4. Par exemple, l'organe de commande manuel 4 comprend un curseur 4A qui forme à la fois un organe de préhension et un organe de pointage, ledit curseur 4A étant par exemple monté à rotation selon un axe vertical central (correspondant à l'axe de révolution de la cuve 2).

Comme évoqué auparavant, ledit organe de commande manuel 4 est avantageusement conçu pour régler ledit tarage, de sorte qu'au moins deux desdites positions de l'organe de commande manuel 4 correspondent respectivement à deux tarages différents, c'est-à-dire à deux valeurs de consigne prédéterminées différentes. Dans un mode de réalisation préférentiel, l'organe de commande manuel 4 est ainsi conçu pour comprimer de façon plus ou moins importante un ressort qui assure le tarage de la soupape de régulation, afin ainsi de régler la valeur de consigne.

Dans le mode de réalisation avantageux illustré aux figures, et comme déjà évoqué dans ce qui précède, l'autocuiseur 1 comprend un dispositif de décompression activable conçu pour faire chuter la pression régnant au sein de l'autocuiseur 1 lorsqu'il est activé. De préférence, ledit dispositif de décompression est conçu pour pouvoir être activé quel que soit le niveau de pression régnant dans l'enceinte, afin de mettre en communication l'intérieur de l'enceinte avec l'extérieur et permettre un échappement de vapeur qui entraînera une baisse de la pression dans l'enceinte jusqu'à un niveau autorisant le déverrouillage du couvercle 3 relativement à la cuve 2 sans risque pour l'utilisateur. Par exemple, le dispositif de décompression activable est réalisé au moyen de la soupape de régulation de pression, qui peut être par exemple conçue soit pour être placée dans une position de fuite correspondant à l'activation du dispositif de décompression, soit par le réglage du tarage de la soupape à une valeur de consigne très faible qui permet de faire chuter considérablement la pression régnant au sein de l'enceinte.

De façon préférentielle, l'organe de commande manuel 4 est conçu pour commander l'activation du dispositif de décompression.

Ainsi, dans le mode de réalisation préférentiel illustré aux figures, l'organe de commande manuel 4 est conçu pour commander d'une part l'activation du dispositif de décompression, lorsqu'il se trouve dans la position correspondant au premier marquage d'identification 7, et d'autre part pour commander le réglage du tarage de la soupape de régulation à différentes valeurs de consignes correspondant respectivement aux deuxième et troisième marquages d'identification 8, 9.

Conformément à l'invention, le système domestique de cuisson d'aliments comprend un module de télécommunication 11 et un module de minuterie 12 indépendants. En d'autres termes, chacun desdits modules de télécommunication 11 et de minuterie 12 forme une unité distincte de l'autocuiseur 1, et qui présente de préférence un caractère portable, c'est-à-dire que chacune desdites unités correspondant respectivement au module de télécommunication 11 et au module de minuterie 12 peut être tenue à, ou dans, la main par l'utilisateur. Le module de télécommunication 11 est distinct et indépendant du module de minuterie 12. Cela n'exclut pas toutefois que le module de télécommunication 11 puisse être formé à partir du module de minuterie 12 ou inversement. Par exemple, le module de télécommunication 11 peut être formé par l'assemblage du module de minuterie 12 et d'une unité électronique complémentaire destinée à être connectée de façon amovible au module de minuterie 12, de façon à transformer le module de minuterie 12 en un nouveau sous-ensemble unitaire constituant le module de télécommunication 11. Inversement, le module de minuterie 12 peut être formé par l'association du module de télécommunication 11 et d'une unité électronique complémentaire (incorporant éventuellement un écran d'affichage) destinée à être connectée de façon amovible au module de télécommunication 11 pour former une nouvelle unité indépendante constituant le module de minuterie 12.

Conformément à l'invention, lesdits autocuiseur 1, module de télécommunication 11 et module de minuterie 12 comportent des moyens d'attache 13A, 13B, 13C complémentaires permettant d'attacher alternativement et de façon amovible à l'autocuiseur 1 lesdits module de télécommunication 11 et module de minuterie 12.

En d'autres termes, les module de télécommunication 11 et module de minuterie 12 sont conçus pour pouvoir être attachés tour à tour à l'autocuiseur 1, avantageusement en une même place destinée à accueillir indifféremment (mais de préférence pas en même temps) le module de télécommunication 11 et le module de minuterie 12. Cela signifie que le moyen d'attache 13A dont est pourvu l'autocuiseur 1 est conçu pour interagir avec le moyen d'attache complémentaire 13B dont est pourvu le module de télécommunication 11, afin d'arrimer de façon amovible ledit module de télécommunication 11 à l'autocuiseur 1, de sorte que l'autocuiseur 1 et le module de télécommunication 11 forment alors un sous-ensemble unitaire. De la même façon, le moyen d'attache 13A dont est pourvu l'autocuiseur 1 est conçu pour coopérer avec le moyen d'attache complémentaire 13C dont est pourvu le module de minuterie 12 afin d'arrimer de façon amovible le module de minuterie 12 à l'autocuiseur 1, de sorte que l'autocuiseur 1 et le module de minuterie 12 forment un sous-ensemble unitaire. Bien entendu, la fixation du module de télécommunication 11 à l'autocuiseur 1, tout comme la fixation du module de minuterie 12 à l'autocuiseur 1, présente un caractère totalement réversible, permettant à l'utilisateur d'attacher à, et de détacher de, l'autocuiseur 1, à volonté (et de préférence de façon purement manuelle, sans outil), soit le module de télécommunication 11, soit le module de minuterie 12, au choix de l'utilisateur.

Les module de télécommunication 11 et module de minuterie 12 présentent ainsi un caractère interchangeable, puisque l'utilisateur peut à tout moment attacher l'un ou l'autre de ces modules à l'autocuiseur 1, en fonction des circonstances et du mode d'utilisation souhaité de l'autocuiseur 1, comme cela ressortira plus en détails de ce qui suit. De préférence, conformément au mode de réalisation illustré aux figures, l'autocuiseur 1 dispose ainsi d'un moyen d'attache 13A unique capable de coopérer à la fois (mais de préférence non simultanément) avec le moyen d'attache complémentaire 13B équipant le module de télécommunication 11 et le moyen d'attache complémentaire 13C équipant le module de minuterie 12.

Conformément à l'invention, le module de télécommunication 11 est capable, lorsqu'il est attaché audit autocuiseur 1, de transmettre à un terminal informatique indépendant, par une liaison sans fil, au moins un signal relatif au fonctionnement dudit autocuiseur 1. En d'autres termes, lorsque le module de télécommunication 11 est attaché, par le biais des moyens d'attache 13A, 13B complémentaires précités, audit autocuiseur 1, il s'établit entre le module de télécommunication 11 et l'autocuiseur 1 une liaison fonctionnelle permettant au module de télécommunication 11 de transmettre, par une liaison immatérielle, un signal relatif au fonctionnement de l'autocuiseur 1 à un terminal informatique qui est distinct de l'autocuiseur 1.

La liaison sans fil est par exemple une liaison mettant en oeuvre des ondes électromagnétiques, et de préférence des ondes radioélectriques, infrarouges ou autres, autorisant (sans liaison physique du genre fil ou câble) un transfert de données analogiques et/ou numériques entre le module de télécommunication 11 et le terminal distant susvisé. De façon préférentielle, la liaison sans fil est une liaison Bluetooth® reposant de façon particulièrement avantageuse sur le protocole « *Bluetooth 4.0, Bluetooth low energy*®»*.* Cela signifie bien entendu que dans ce cas, à la fois le module de télécommunication 11 et le terminal informatique indépendant susvisé, sont équipés de la technologie Bluetooth® pour permettre une communication, de préférence bidirectionnelle, entre eux. Le terminal informatique en question, qui fait avantageusement partie du système selon l'invention, est totalement indépendant de l'autocuiseur 1, et présente avantageusement un caractère portatif, c'est-à-dire qu'il est de préférence conçu pour pouvoir être transporté et manipulé à une ou deux mains par l'utilisateur. Avantageusement, le terminal informatique en question est constitué par un ordiphone (en anglais « *smartphone* »), une tablette tactile (du genre Apple iPad®) ou un ordinateur portable, de préférence équipés chacun de la technologie Bluetooth®, comme exposé précédemment. Avantageusement, le terminal informatique susvisé est pourvu d'un écran d'affichage, de façon à pouvoir mettre en oeuvre une interface graphique d'assistance à l'utilisation de l'autocuiseur 1. L'interface graphique 10 est ainsi de préférence mise en oeuvre par un (ou plusieurs) logiciel installé sur le terminal informatique, pour produire sur l'écran du terminal informatique des informations écrites ou dessinées, afin de guider l'utilisateur dans son utilisation de l'autocuiseur 1, de préférence en temps réel, à la manière d'un « *coach* » virtuel. L'interface graphique en question présente avantageusement un caractère interactif, qui est rendu possible grâce à la transmission, par le module de télécommunication 11, dudit signal relatif au fonctionnement de l'autocuiseur 1. En effet, le terminal informatique indépendant peut dans ce cas réceptionner le signal relatif au fonctionnement de l'autocuiseur 1 en provenance du module de télécommunication 11 attaché à l'autocuiseur 1, de façon à traiter ce signal pour afficher à l'attention de l'utilisateur des informations et données susceptibles d'aider l'utilisateur à utiliser de façon optimale son autocuiseur 1. L'utilisation d'un terminal informatique indépendant permet bien entendu de bénéficier de toutes les fonctionnalités propres audit terminal informatique, notamment en matière d'affichage et de capacité de calcul, pour fournir à l'utilisateur une information particulièrement riche, intuitive, ergonomique et détaillée.

Dans un mode de réalisation particulièrement avantageux, le module de télécommunication 11 permet ainsi d'établir un lien fonctionnel sans fil entre un autocuiseur 1 et un outil informatique communiquant externe (ordiphone, tablette...) du commerce, sur lequel est mis en oeuvre un logiciel générant en particulier une interface graphique d'assistance à l'utilisation.

Le module de minuterie 12 est quant à lui capable, lorsqu'il est attaché à l'autocuiseur 1, de décompter une durée prédéterminée à compter de l'instant où la pression régnant dans l'autocuiseur 1 atteint sensiblement la valeur de consigne pour la première fois. Le module de minuterie 12 est donc conçu pour détecter l'atteinte de la valeur de consigne et déclencher en retour une minuterie qui décompte une durée prédéterminée, laquelle correspond en l'espèce à une durée souhaitée de cuisson des aliments à la pression de fonctionnement. La durée prédéterminée est avantageusement programmable par l'utilisateur, par exemple au moyen d'organes de programmation (du genre boutons, écran tactile ou autre) dont est pourvu le module de minuterie 12.

Ainsi, l'utilisateur peut choisir, en fonction des circonstances (et en particulier selon qu'il dispose ou non d'un terminal informatique du genre tablette tactile ou ordiphone) d'attacher à l'autocuiseur 1 :
- soit le module de télécommunication 11 pour bénéficier d'une assistance à l'utilisation particulièrement élaborée par le biais du terminal informatique indépendant dont il dispose,
- soit le module de minuterie 12, pour privilégier un fonctionnement purement autonome, qui ne requiert pas la mise en oeuvre d'un terminal informatique indépendant, mais qui permet toutefois de décompter automatiquement une durée prédéterminée (avantageusement programmable) à compter de l'instant (détecté automatiquement par le module de minuterie 12) où la pression dans l'autocuiseur a atteint la valeur de consigne.

Avantageusement, lesdits moyens d'attache 13A, 13B, 13C comprennent un premier connecteur 130B embarqué sur le module de télécommunication 11, un deuxième connecteur 130C embarqué sur le module de minuterie 12 et un port de connexion 130A embarqué sur l'autocuiseur 1, ledit port de connexion 130A étant conçu pour interagir indifféremment avec le premier et le deuxième connecteur 130B, 130C afin d'accoupler mécaniquement et fonctionnellement le port de connexion 130A avec respectivement le premier connecteur 130B ou le deuxième connecteur 130C. Ainsi, la coopération du premier connecteur 130B avec le port de connexion 130A assure une connexion mécanique et fonctionnelle du module de télécommunication 11 et de l'autocuiseur 1, tandis que la coopération du deuxième connecteur 130C avec le même port de connexion 130A assure une connexion mécanique et fonctionnelle du module de minuterie 12 et de l'autocuiseur 1. Par *« connexion fonctionnelle* » on entend désigner ici une connexion permettant au moins:
- au module de télécommunication 11 de transmettre ledit signal représentatif du fonctionnement de l'autocuiseur 1 ;
- et au module de minuterie 12 de détecter l'instant où la pression régnant dans l'autocuiseur atteint sensiblement la valeur de consigne pour la première fois, afin de décompter en réponse ladite durée prédéterminée.

Avantageusement, le port de connexion 130A est embarqué sur le couvercle 3 de l'autocuiseur 1. Par exemple, comme illustré aux figures, le port de connexion 130A se présente sous la forme d'un logement en creux ménagé à la surface du couvercle 3, du côté de la face extérieure de ce dernier, chacun desdits modules de télécommunication 11 et de minuterie 12 présentant une forme sensiblement complémentaire de celle dudit logement, de sorte que ce dernier peut recevoir tour à tour le module de télécommunication 11 et le module de minuterie 12. Ainsi, dans ce mode de réalisation particulièrement avantageux, le port de connexion 130A est constitué d'une conformation concave, en creux, localisée sur le couvercle 3 et destinée à accueillir alternativement, et au choix de l'utilisateur, le module de télécommunication 11 et le module de minuterie 12.

Avantageusement, l'autocuiseur 1 comprend une platine de commande 14 rapportée sur le couvercle 3, et plus précisément sur la surface extérieure de ce dernier, comme illustré aux figures. La platine 14 est montée soit à demeure, soit de façon amovible, sur le couvercle 3. La platine 14 forme un sous-ensemble unitaire qui embarque avantageusement les principaux organes de commande et de régulation de l'autocuiseur 1, et en particulier l'organe de commande 4 du tarage et de la décompression, l'organe de commande 5 du verrouillage/déverrouillage, la soupape de régulation de pression et le conduit d'échappement de vapeur 10 qui lui est associé, une éventuelle soupape de sécurité de surpression, un éventuel organe de sécurité à l'ouverture, et le logement creux formant le port de connexion 130A.

Avantageusement, chacun desdits premier et deuxième connecteurs 130B, 130C est formé par une attache élastique conçue pour pouvoir adopter au moins une configuration active lorsque le module de télécommunication 11, respectivement le module de minuterie 12, est rapporté dans le logement creux formant le port de connexion 130A, pour exercer sur une conformation complémentaire dudit logement, par déformation à l'accouplement, un effort d'immobilisation relative du port de connexion 130A et du module (de télécommunication 11 ou de minuterie 12) correspondant. En d'autres termes, chaque attache élastique formant respectivement le premier connecteur 130B et le deuxième connecteur 130C est conçue pour pouvoir se déformer lorsqu'elle interagit avec le port de connexion 130A, cette interaction générant, tant qu'elle existe, une déformation de l'attache élastique concernée. Cette déformation produit en réaction, par retour élastique, un effort tendant à immobiliser le module concerné par rapport à l'autocuiseur 1. Chacun desdits module de télécommunication 11 et de minuterie 12 est ainsi avantageusement conçu pour pouvoir être accouplé par « *clipsage* » à l'autocuiseur 1. Le déclipsage peut être obtenu de façon manuelle, en exerçant avec un ou deux doigts (sans outil) un effort de désaccouplement sur le connecteur concerné (premier connecteur 130B ou deuxième connecteur 130C) de façon à surmonter l'effet de retour élastique et pouvoir ainsi extraire hors du logement le module concerné. Un tel système d'accouplement mécanique est particulièrement facile à fabriquer et à utiliser, tout en étant robuste et fiable. Un tel système d'attache peut en outre être réalisé entièrement à l'aide de matières plastiques, ce qui facilite la fabrication du système et en limite le coût.

Avantageusement, le module de télécommunication 11 inclut un premier détecteur 15 capable, lorsque ledit module de télécommunication 11 est attaché audit autocuiseur 1, par interverrouillage des moyens d'attache complémentaires 13A, 13B, de produire un premier signal représentatif de la pression et/ou de la température régnant dans l'autocuiseur 1, ledit premier signal formant, ou étant inclut dans, et/ou permettant d'obtenir, ledit signal relatif au fonctionnement dudit autocuiseur 1. De préférence, le premier détecteur 15 comprend un premier capteur de température 15A conçu pour être disposé dans le, et/ou voisinage du, conduit d'échappement de vapeur 10 lorsque ledit module de télécommunication 11 est attaché audit autocuiseur 1, pour permettre audit premier capteur de température 15A de capter l'augmentation de température résultant de l'échappement de vapeur à travers le conduit 10 qui se produit lorsque la pression régnant au sein de l'autocuiseur 1 excède la valeur de consigne.

De la même façon, le module de minuterie 12 inclut avantageusement un deuxième détecteur 16 capable, lorsque ledit module de minuterie 12 est attaché audit autocuiseur 1, de produire un deuxième signal représentatif de la pression et/ou de la température régnant dans l'autocuiseur 1, à partir duquel ledit module de minuterie 12 est conçu pour déterminer ledit instant où la pression régnant dans l'autocuiseur 1 atteint sensiblement ladite valeur de consigne pour la première fois.

Dans un mode de réalisation avantageux, le deuxième détecteur 16 comprend lui aussi un deuxième capteur de température 16A conçu pour être disposé dans le, et/ou au voisinage du, conduit d'échappement de vapeur 10 lorsque ledit module de minuterie 12 est attaché audit autocuiseur 1, pour permettre audit deuxième capteur de température 16A de capter l'augmentation de température résultant dudit échappement de la vapeur à travers le conduit 10, lorsque la soupape de régulation autorise la vapeur à s'échapper par le conduit 10 dès que la pression régnant au sein de l'autocuiseur excède ladite valeur de consigne.

De préférence chacun desdits premier et deuxième détecteurs 15, 16 susvisé est avantageusement conçu pour fonctionner selon le principe décrit dans le document EP-1 458 268, dont le contenu est incorporé par référence. Par exemple, le premier capteur de température et/ou le deuxième capteur de température inclu(en)t chacun une sonde thermocouple capable de délivrer un signal électrique représentatif de la température.

Chacun desdits capteurs de température 15A, 16A est avantageusement disposé à une extrémité du module 11, 12 correspondant, de sorte que lorsque ledit module 11, 12 est attaché à l'autocuiseur 1, le capteur de température associé 15A, 16 A est disposé au niveau de la sortie du conduit d'échappement 10, sur la trajectoire du flux de vapeur, afin de capter l'élévation de température associée à l'apparition d'un premier flux de vapeur dans le conduit 10, laquelle reflète l'atteinte de la valeur de consigne de pression. D'autres modes de fonctionnement sont alors envisageables, en fonction de la nature du module (module de télécommunication 11 ou module de minuterie 12) qui est attaché à l'autocuiseur. Lorsque le module de télécommunication 11 est attaché à l'autocuiseur, le signal électrique représentatif de la température captée par le premier capteur 15A est traité par le module de télécommunication 11 (qui intègre par exemple à cet effet un microcontrôleur) pour détecter l'instant où la valeur de consigne de pression est atteinte au sein de l'autocuiseur 1. Le module de télécommunication 11 envoie alors cette information au terminal informatique distant pour que l'interface graphique mise en oeuvre par ce dernier utilise cette information, par exemple pour déclencher le décompte d'une durée de cuisson prédéterminée. Alternativement, il est envisageable que le signal de température produit par le premier capteur de température 15A soit envoyé à l'état « *brut* » (sans aucun traitement numérique ou analogique) par le module de télécommunication 11 au terminal distant, lequel se chargera d'analyser le signal pour déterminer l'instant où la valeur de consigne de pression est atteinte. Dans ce dernier cas de figure, le signal de température est envoyé en continu ou à intervalles réguliers par le module de télécommunication 11 au terminal distant, pour que ce dernier puisse déterminer l'instant correspondant à l'élévation de température découlant de l'atteinte de la valeur de consigne de pression.

Si au contraire l'utilisateur a choisi d'attacher à l'autocuiseur 1 non pas le module émetteur 11, mais le module de minuterie 12, ce dernier sera capable de déterminer, grâce au deuxième capteur de température 16A, l'instant où la valeur de consigne de pression est atteinte pour la première fois. Le module de minuterie 12 sera alors capable de décompter automatiquement, par lui-même, ladite durée prédéterminée à compter de l'instant où la valeur de consigne a été atteinte.

L'utilisateur peut ainsi bénéficier soit d'un mode d'utilisation « *local* » dans lequel le signal de température est entièrement traité par le module de minuterie 12 qui décompte lui-même la durée prédéterminée de cuisson sous pression, soit d'un mode « *déporté* » dans lequel le module de télécommunication 11 communique le signal de température par une liaison sans fil au terminal distant, lequel se chargera avantageusement de décompter la durée prédéterminée, de préférence dans le cadre de la mise en oeuvre par ledit terminal d'une interface graphique d'assistance à l'utilisation.

Dans les deux cas, le système est avantageusement conçu pour afficher le décompte de la durée prédéterminée afin que l'utilisateur puisse accéder aisément et en permanence à la durée restante de cuisson sous pression. A cette fin, le module de minuterie 12 inclut un écran d'affichage 12A affichant au moins ledit décompte de la durée prédéterminée. Dans le cas ou c'est le module de télécommunication 11 qui est mis en oeuvre avec l'autocuiseur 1, le décompte de la durée prédéterminée de cuisson sous pression est cette fois affichée par l'écran dont est pourvu avantageusement le terminal informatique indépendant qui réceptionne le signal émis par le module de télécommunication 11 en réponse à l'élévation brutale de température détectée par le premier capteur de température 15A. De préférence, le module de télécommunication est dépourvu d'écran d'affichage, contrairement au module de minuterie 12.

Avantageusement, le module de télécommunication 11 comprend un troisième détecteur (non visible aux figures) capable, lorsque le module de télécommunication 11 est attaché à l'autocuiseur 1 (c'est à dire en l'espèce accueilli par le port de connexion 130A), de produire un troisième signal qui est représentatif de la position adoptée par l'organe de commande manuel 4, ledit troisième signal formant, ou étant inclut dans, et/ou permettant d'obtenir, ledit signal relatif au fonctionnement dudit autocuiseur 1.

Grâce à cette disposition technique avantageuse, le logiciel d'assistance à l'utilisation mis en oeuvre par le terminal informatique indépendant peut connaître en permanence la position réelle de l'organe de commande manuel 4, et adapter en conséquence les informations et données fournies à l'utilisateur pour l'aider à utiliser l'autocuiseur 1 de manière optimale.

Ainsi, le troisième détecteur génère avantageusement un signal électrique représentatif de la position instantanée occupée par l'organe de commande 4. Ce signal électrique est transmis, de préférence immédiatement, par le module de télécommunication 11, au terminal informatique distant, de façon à ce que ledit signal soit traité par l'interface graphique mise en oeuvre par ledit terminal. Ce traitement pourra par exemple consister à commander la position d'un pointeur virtuel affiché par l'écran du terminal, afin que la position dudit pointeur virtuel reflète en temps réel la position instantanée occupée par l'organe de commande manuel 4.

Le troisième détecteur peut être de tout type connu de l'homme du métier. Par exemple, le troisième détecteur inclut une première pluralité de capteurs magnéto-résistifs, tandis que l'organe de commande manuel 4 embarque quant à lui un premier activateur magnétique conçu pour exciter sélectivement et à distance un ou plusieurs desdits capteurs magnéto-résistifs en fonction de la position de l'organe de commande manuel 4, de façon à coder ainsi ladite position de ce dernier, conformément à l'enseignement du document WO-2010/081994, dont le contenu est incorporé par référence. De façon préférentielle, le module de télécommunication 11 embarque ainsi une série de capteurs magnéto-résistifs (par exemple fabriqués selon la technologie CMOS) disposés à intervalle régulier, selon un arc de cercle, tandis que l'organe de commande manuel 4, qui se déplace avantageusement en rotation, embarque un aimant capable d'exciter sélectivement un ou plusieurs desdits capteurs magnéto-résistifs comme exposé précédemment.

Dans un mode de réalisation particulièrement avantageux (qui correspond à celui illustré aux figures), le module de télécommunication 11 est ainsi capable de transmettre au terminal informatique indépendant :
- le premier signal précité, qui est représentatif de la pression et/ou de la température régnant dans l'autocuiseur 1, et qui est obtenu au moyen du premier capteur de température 15A ;
- et le troisième signal précité, qui est représentatif de la position adoptée par l'organe de commande manuel 4, et qui est obtenu au moyen de la combinaison des capteurs magnéto-résistifs embarqués dans le module de télécommunication 11 et de l'aimant d'excitation embarqué sur l'organe de commande manuel 4.

Le « *signal relatif au fonctionnement* » de l'autocuiseur 1 évoqué précédemment est donc dans ce cas formé de plusieurs signaux qui sont transmis à différents instants au terminal informatique indépendant par le module de télécommunication 11. L'interface graphique qui est avantageusement mise en oeuvre par le terminal distant est ainsi capable, grâce aux informations provenant desdits premier signal et troisième signal, de renseigner en permanence l'utilisateur de façon particulièrement simple et ergonomique sur l'état de fonctionnement instantané de l'autocuiseur 1, voire même de piloter en retour ce dernier.

Avantageusement, le module de minuterie 12 comprend lui aussi un quatrième détecteur capable, lorsque le module de minuterie 12 est attaché à l'autocuiseur 1, de produire un quatrième signal qui est représentatif de la position adoptée par l'organe de commande manuel 4, à partir duquel ledit module de minuterie 12 affiche, sur ledit écran d'affichage 12A, une information représentative de la position adoptée par ledit organe de commande manuel 4. Avantageusement, le quatrième détecteur inclut une deuxième pluralité de capteurs magnéto-résistifs, tandis que l'organe de commande manuel 4 embarque un deuxième activateur magnétique conçu pour exciter sélectivement et à distance un ou plusieurs desdits capteurs magnéto-résistifs en fonction de la position de l'organe de commande manuel 4, de façon à coder ainsi ladite position. Dans ce mode de réalisation avantageux, le fonctionnement du quatrième détecteur, de même que sa structure, sont sensiblement identiques au fonctionnement et à la structure du troisième détecteur évoqué précédemment en ce qui concerne le module de télécommunication 11.

Avantageusement, lesdits premiers et deuxième activateurs magnétiques sont confondus, c'est à dire que l'organe de commande manuel 4 incorpore un seul et même activateur magnétique (aimant permanent par exemple) capable de coopérer avec soit la première pluralité de capteurs magnéto-résistifs (si le module de télécommunication 11 est attaché à l'autocuiseur 1) soit la deuxième pluralité de capteurs magnéto-résistifs (si le module de minuterie 12 est attaché à l'autocuiseur 1) pour coder la position instantanée de l'organe de commande manuel 4 et permettre au module concerné de produire un signal représentatif de cette position, ledit signal étant destiné à être utilisé soit localement (par le module de minuterie 12, pour afficher sur son écran 12A une information, du genre pictogramme ou autre, représentative de la position adoptée par l'organe de commande manuel 4) soit à distance (l'information de position étant transmise par liaison sans fil au terminal distant qui l'utilise ensuite pour par exemple afficher, sur l'écran du terminal informatique, une information représentative de la position adoptée par l'organe de commande manuel 4).

En définitive, dans le mode de réalisation particulièrement avantageux illustré aux figures, le module de télécommunication 11 et le module de minuterie 12 sont tous deux capables de produire :
- un signal représentatif de la pression et/ou de la température (étant entendu que la pression au sein de l'autocuiseur dépend de la température régnant dans l'autocuiseur et réciproquement) ;
- et un signal représentatif de la position de l'organe de commande manuel 4.

La différence essentielle entre les deux modules 11, 12 réside dans le fait que le module de minuterie 12 traite les informations découlant des signaux susvisés lui-même directement, en local, de façon par exemple à afficher sur un écran 12A dont il est muni des informations relatives par exemple au décompte de la durée prédéterminée de cuisson sous pression et à la position adoptée par l'organe de commande manuel 4, tandis que le module de télécommunication 11 est capable quant à lui de transmettre à un terminal distant, des informations relatives à l'atteinte de la valeur de consigne et à la position de l'organe de commande manuel 4, afin que ces informations soient traitées par un logiciel d'assistance à l'utilisation.

Il est cependant tout à fait envisageable que l'un ou l'autre des modules de télécommunication 11 et de minuterie 12 ne mette pas en oeuvre tous les détecteurs et capteurs envisagés précédemment. A cet égard, les termes « *premier », « deuxième », « troisième* » et « *quatrième* » employés dans ce qui précède visent uniquement à identifier sans ambiguïté les éléments (détecteurs, capteurs, signal...) décrits. Cela signifie par exemple qu'il est tout à fait possible que le système comprenne uniquement le deuxième détecteur 16 évoqué précédemment mais pas le premier détecteur 15, ou inversement.

Comme décrit dans ce qui précède, ledit module de télécommunication 11 comporte lui aussi des moyens d'attache 13B complémentaires desdits moyens d'attache 13A dont est pourvu l'autocuiseur 1, pour attacher de façon amovible à l'autocuiseur 1 ledit module de télécommunication 11 à la place dudit module de minuterie 12. Comme décrit auparavant, ledit module de télécommunication 11 est capable, lorsqu'il est attaché audit autocuiseur 1, de transmettre à un terminal informatique indépendant, par une liaison sans fil, au moins un signal relatif au fonctionnement dudit autocuiseur 1.

De préférence, le module de télécommunication 11 est au moins équipé d'un émetteur radio, et de préférence d'un système d'émission Bluetooth®. De façon particulièrement préférentielle, comme exposé dans ce qui précède, le module de télécommunication 11 embarque non seulement un émetteur d'ondes radioélectriques mais également un capteur de température 15A et un capteur de position, ou des éléments de capteur de position, comme par exemple des capteurs magnéto-résistifs.

L'invention concerne enfin en tant que tel un procédé domestique de cuisson d'aliments au moyen d'un autocuiseur 1, qui est de préférence mis en oeuvre à l'aide du système décrit précédemment.

L'ensemble de la description qui précède s'applique donc totalement, mutatis mutandis, au procédé domestique de cuisson selon l'invention. Ce procédé est donc un procédé domestique de cuisson d'aliments au moyen d'un autocuiseur 1 pourvu d'au moins une soupape de régulation de pression conçue pour maintenir la pression régnant dans l'autocuiseur 1 sensiblement à une valeur de consigne.

Le procédé en question comprend une étape dans laquelle un module de télécommunication 11 et un module de minuterie 12 indépendants sont tour à tour attachés de façon amovible à l'autocuiseur 1, ledit module de télécommunication 11 étant capable, lorsqu'il est attaché à l'autocuiseur 1, de transmettre à un terminal informatique indépendant, par une liaison sans fil, au moins un signal relatif au fonctionnement dudit autocuiseur 1, tandis que le module de minuterie 12 est capable, lorsqu'il est attaché audit autocuiseur 1, de décompter une durée prédéterminée à compter de l'instant où la pression régnant dans l'autocuiseur 1 atteint sensiblement ladite valeur de consigne pour la première fois.

L'invention permet ainsi à un utilisateur d'un autocuiseur 1 de bénéficier soit d'un mode de fonctionnement totalement autonome avec une assistance réduite (qui s'opère par le biais du module de minuterie 12) soit d'un mode à assistance avancée et déportée qui s'opère par le biais du module de télécommunication 11, l'autocuiseur 1 étant pourvu d'un port unique conçu pour accueillir indifféremment l'un ou l'autre desdits modules 11,12, lesquels sont tous deux avantageusement en possession de l'utilisateur pour laisser le choix à ce dernier du mode d'utilisation de l'autocuiseur 1. Le port unique en question permet ainsi d'assurer soit avec le module de télécommunication 11 soit avec le module de minuterie 12, une double connexion mécanique (interverrouillage) et fonctionnelle.

## Revendications

1. Système domestique de cuisson d'aliments comprenant un autocuiseur (1) pourvu d'une soupape de régulation de pression conçue pour maintenir la pression régnant dans l'autocuiseur (1) sensiblement à une valeur de consigne, ledit système étant **caractérisé en ce qu'**il comprend également un module de télécommunication (11) et un module de minuterie (12) indépendants, lesdits autocuiseur (1), module de télécommunication (11) et module de minuterie (12) comportant des moyens d'attache (13A, 13B, 13C) complémentaires permettant d'attacher alternativement et de façon amovible à l'autocuiseur (1) lesdits module de télécommunication (11) et module de minuterie (12), ledit module de télécommunication (11) étant capable, lorsqu'il est attaché audit autocuiseur (1), de transmettre à un terminal informatique indépendant, par une liaison sans fil, au moins un signal relatif au fonctionnement dudit autocuiseur (1), tandis que ledit module de minuterie (12) est capable, lorsqu'il est attaché audit autocuiseur (1), de décompter une durée prédéterminée à compter de l'instant où la pression régnant dans l'autocuiseur (1) atteint sensiblement ladite valeur de consigne pour la première fois.

2. Système selon la revendication 1 **caractérisé en ce que** lesdits moyens d'attache comprennent un premier connecteur (130B) embarqué sur le module de télécommunication (11), un deuxième connecteur (130C) embarqué sur le module de minuterie (12) et un port de connexion (130A) embarqué sur l'autocuiseur (1), ledit port de connexion (130A) étant conçu pour interagir indifféremment avec le premier et le deuxième connecteur (130B, 130C) afin d'accoupler mécaniquement et fonctionnellement le port de connexion (130A) avec respectivement le premier ou le deuxième connecteur (130B, 130C).

3. Système selon la revendication 2 **caractérisé en ce que** ledit autocuiseur (1) comprend une cuve (2) et un couvercle (3) destiné à être associé à la cuve (2) pour former une enceinte de cuisson au sein de laquelle la pression est capable d'atteindre ladite valeur de consigne, ledit port de connexion (130A) étant embarqué sur ledit couvercle (3).

4. Système selon la revendication 3 **caractérisé en ce que** ledit port de connexion (130A) se présente sous la forme d'un logement en creux ménagé à la surface du couvercle (3), chacun desdits modules de télécommunication (11) et de minuterie (12) présentant une forme sensiblement complémentaire de celle dudit logement, de sorte que ce dernier peut recevoir tour à tour le module de télécommunication (11) et le module de minuterie (12).

5. Système selon l'une des revendications 1 à 4 **caractérisé en ce que** ledit autocuiseur comprend un conduit d'échappement de vapeur (10), par lequel ladite soupape de régulation autorise la vapeur à s'échapper dès que la pression régnant au sein de l'autocuiseur (1) excède ladite valeur de consigne.

6. Système selon l'une des revendications 1 à 5 **caractérisé en ce que** le module de télécommunication (11) inclut un premier détecteur (15) capable, lorsque ledit module de télécommunication (11) est attaché audit autocuiseur (1), de produire un premier signal représentatif de la pression et/ou de la température régnant dans l'autocuiseur (1), ledit premier signal formant, ou étant inclus dans, et/ou permettant d'obtenir, ledit signal relatif au fonctionnement dudit autocuiseur (1).

7. Système selon les revendications 5 et 6 **caractérisé en ce que** ledit premier détecteur (15) comprenant un premier capteur de température (15A) conçu pour être disposé dans le, et/ou au voisinage du, conduit d'échappement de vapeur (10) lorsque ledit module de télécommunication (11) est attaché audit autocuiseur (1), pour permettre audit premier capteur de température (15A) de capter l'augmentation de température résultant dudit échappement de la vapeur à travers dudit conduit (10).

8. Système selon l'une des revendications 1 à 7 **caractérisé en ce que** le module de minuterie (12) inclut un deuxième détecteur (16) capable, lorsque ledit module de minuterie (12) est attaché audit autocuiseur (1), de produire un deuxième signal représentatif de la pression et/ou de la température régnant dans l'autocuiseur (1), à partir duquel ledit module de minuterie (12) est conçu pour déterminer ledit instant où la pression régnant dans l'autocuiseur (1) atteint sensiblement ladite valeur de consigne pour la première fois.

9. Système selon les revendications 5 et 8 **caractérisé en ce que** ledit deuxième détecteur (16) comprend un deuxième capteur de température (16A) conçu pour être disposé dans le, et/ou au voisinage du conduit d'échappement de vapeur (10) lorsque ledit module de minuterie (12) est attaché audit autocuiseur (1), pour permettre audit deuxième capteur de température (16A) de capter l'augmentation de température résultant dudit échappement de la vapeur à travers le conduit (10).

10. Système selon l'une des revendications 1 à 9 **caractérisé en ce que** ledit autocuiseur (1) est pourvu d'au moins un organe de commande manuel (4) mobile entre une pluralité de positions correspondant respectivement à une pluralité d'états de fonctionnement dudit autocuiseur (1).

11. Système selon la revendication 10 **caractérisé en ce que** ledit module de télécommunication (11) comprend un troisième détecteur capable, lorsque ledit module de télécommunication (11) est attaché à l'autocuiseur, de produire un troisième signal représentatif de la position adoptée par l'organe de commande manuel (4), ledit troisième signal formant, ou étant inclus dans, et/ou permettant d'obtenir, ledit signal relatif au fonctionnement dudit autocuiseur (1).

12. Système selon la revendication 11 **caractérisé en ce que** ledit troisième détecteur inclut une première pluralité de capteurs magnéto-résistifs, tandis que l'organe de commande manuel (4) embarque un premier activateur magnétique conçu pour exciter sélectivement et à distance un ou plusieurs desdits capteurs magnéto-résistifs en fonction de la position de l'organe de commande manuel (4), de façon à coder ainsi ladite position de ce dernier.

13. Système selon l'une des revendications 1 à 12 **caractérisé en ce que** ledit module de minuterie (12) inclut un écran d'affichage (12A) affichant au moins ledit décompte de la durée prédéterminée.

14. Système selon les revendications 10 et 13 **caractérisé en ce que** ledit module de minuterie (12) comprend un quatrième détecteur capable, lorsque ledit module de minuterie (12) est attaché à l'autocuiseur (1), de produire un quatrième signal représentatif de la position adoptée par l'organe de commande manuel (4), à partir duquel ledit module de minuterie affiche sur ledit écran d'affichage une information représentative de la position adoptée par l'organe de commande manuel (4).

15. Système selon la revendication 14 **caractérisé en ce que** ledit quatrième détecteur inclut une deuxième pluralité de capteurs magnéto-résistifs, tandis que l'organe de commande manuel (4) embarque un deuxième activateur magnétique conçu pour exciter sélectivement et à distance un ou plusieurs desdits capteurs magnéto-résistifs en fonction de la position de l'organe de commande manuel (4), de façon à coder ainsi ladite position.

16. Système selon les revendications 12 et 15 **caractérisé en ce que** lesdits premier et deuxième activateurs magnétiques sont confondus.

17. Système selon l'une des revendications 1 à 16 **caractérisé en ce que** ladite liaison sans fil est une liaison Bluetooth ®.

18. Procédé domestique de cuisson d'aliments au moyen d'un autocuiseur (1) pourvu d'une soupape de régulation de pression conçue pour maintenir la pression régnant dans l'autocuiseur sensiblement à une valeur de consigne, **caractérisé en ce qu'**il comprend une étape dans laquelle un module de télécommunication (11) et un module de minuterie (12) indépendants sont tour à tour attachés de façon amovible audit autocuiseur (1), ledit module de télécommunication (11) étant capable, lorsqu'il est attaché audit autocuiseur (1), de transmettre à un terminal informatique indépendant, par une liaison sans fil, au moins un signal relatif au fonctionnement dudit autocuiseur (1), tandis que ledit module de minuterie (12) est capable, lorsqu'il est attaché audit autocuiseur (1), de décompter une durée prédéterminée à compter de l'instant où la pression régnant dans l'autocuiseur (1) atteint sensiblement ladite valeur de consigne pour la première fois.

## Patentansprüche

1. Haushaltskochsystem für Nahrung, umfassend einen Schnellkochtopf (1), der mit einem Druckregelventil versehen ist, das dazu eingerichtet ist, den in dem Schnellkochtopf (1) herrschenden Druck im Wesentlichen auf einem Sollwert zu halten, wobei das System **dadurch gekennzeichnet ist, dass** es auch ein unabhängiges Telekommunikationsmodul (11) und ein unabhängiges Timer-Modul (12) umfasst, wobei der Schnellkochtopf (1), das Telekommunikationsmodul (11) und das Timer-Modul (12) komplementäre Anbringungsmittel (13A, 13B, 13C) aufweisen, die es ermöglichen, das Telekommunikationsmodul (11) und das Timer-Modul (12) abwechselnd und lösbar an dem Schnellkochtopf (1) anzubringen, wobei das Telekommunikationsmodul (11) in der Lage ist, wenn es an dem Schnellkochtopf (1) angebracht ist, mindestens ein Signal, das sich auf den Betrieb des Schnellkochtopfes (1) bezieht, über eine drahtlose Verbindung an ein unabhängiges Computer-Endgerät zu übertragen, während das Timer-Modul (12) in der Lage ist, wenn es an dem Schnellkochtopf (1) angebracht ist, eine vorbestimmte Dauer beginnend ab dem Zeitpunkt, in dem der im Schnellkochtopf (1) herrschende Druck den Sollwert im Wesentlichen zum ersten Mal erreicht, herunterzuzählen.

2. System nach Anspruch 1, **dadurch gekennzeichnet, dass** die Anbringungsmittel einen ersten Verbinder (130B), der in das Telekommunikationsmodul (11) eingebaut ist, einen zweiten Verbinder (130C), der in das Timer-Modul (12) eingebaut ist, und einen Verbindungsanschluss (130A), der in den Schnellkochtopf (1) eingebaut ist, umfassen, wobei der Verbindungsanschluss (130A) eingerichtet ist, um unabhängig mit dem ersten und zweiten Verbinder (130B, 130C) zu interagieren, um den Verbindungsanschluss (130A) mechanisch und funktionell mit dem ersten bzw. dem zweiten Verbinder (130B, 130C) zu koppeln.

3. System nach Anspruch 2, **dadurch gekennzeichnet, dass** der Schnellkochtopf (1) eine Wanne (2) und einen Deckel (3), der zur Verbindung mit der Wanne (2) bestimmt ist, umfasst, um einen Kochraum zu bilden, in dem der Druck in der Lage ist, den Sollwert zu erreichen, wobei der Verbindungsanschluss (130A) in dem Deckel (3) eingebaut ist.

4. System nach Anspruch 3, **dadurch gekennzeichnet, dass** der Verbindungsanschluss (130A) in Form einer vertieften Aufnahme auf der Oberfläche des Deckels (3) vorgesehen ist, wobei jedes der Telekommunikations- (11) und Timer-Module (12) eine Form aufweist, die im Wesentlichen komplementär zu derjenigen der Aufnahme ist, so dass diese ihrerseits das Telekommunikationsmodul (11) und das Timer-Modul (12) aufnehmen kann.

5. System nach einem der Ansprüche 1 bis 4, **dadurch gekennzeichnet, dass** der Schnellkochtopf eine Dampfabzugsleitung (10) umfasst, durch die das Regelventil den Dampf entweichen lässt, sobald der in dem Schnellkochtopf (1) herrschende Druck den Sollwert überschreitet.

6. System nach einem der Ansprüche 1 bis 5, **dadurch gekennzeichnet, dass** das Telekommunikationsmodul (11) einen ersten Detektor (15) enthält, der, wenn das Telekommunikationsmodul (11) an dem Schnellkochtopf (1) angebracht ist, in der Lage ist, ein erstes Signal zu erzeugen, das für den in dem Schnellkochtopf (1) herrschenden Druck und/oder die herrschende Temperatur repräsentativ ist, wobei das erste Signal das Signal, das sich auf den Betrieb des Schnellkochtopfes (1) bezieht, bildet, oder darin enthalten ist, und/oder dieses bereitstellen kann.

7. System nach den Ansprüchen 5 und 6, **dadurch gekennzeichnet, dass** der erste Detektor (15) einen ersten Temperatursensor (15A) umfasst, der dazu eingerichtet ist, in und/oder angrenzend an die Dampfabzugsleitung (10) angeordnet zu werden, wenn das Telekommunikationsmodul (11) an dem Schnellkochtopf (1) angebracht ist, um es dem ersten Temperatursensor (15A) zu ermöglichen, den Temperaturanstieg zu erfassen, der sich aus dem Dampfabzug durch die Leitung (10) ergibt.

8. System nach einem der Ansprüche 1 bis 7, **dadurch gekennzeichnet, dass** das Timer-Modul (12) einen zweiten Detektor (16) enthält, der in der Lage ist, wenn das Timer-Modul (12) an dem Schnellkochtopf (1) angebracht ist, ein zweites Signal zu erzeugen, das für den in dem Schnellkochtopf (1) herrschenden Druck und/oder die Temperatur repräsentativ ist, von dem aus das Timer-Modul (12) dazu eingerichtet ist, den Zeitpunkt zu bestimmen, an dem der in dem Schnellkochtopf (1) herrschende Druck den Sollwert im Wesentlichen zum ersten Mal erreicht.

9. System nach den Ansprüchen 5 und 8, **dadurch gekennzeichnet, dass** der zweite Detektor (16) einen zweiten Temperatursensor (16A) umfasst, der zur Anordnung in und/oder angrenzend an die Dampfabzugsleitung (10) eingerichtet ist, wenn das Timer-Modul (12) an dem Schnellkochtopf (1) angebracht ist, um es dem zweiten Temperatursensor (16A) zu ermöglichen, den Temperaturanstieg zu erfassen, der sich aus dem Dampfabzug durch die Leitung (10) ergibt.

10. System nach einem der Ansprüche 1 bis 9, **dadurch gekennzeichnet, dass** der Schnellkochtopf (1) mit mindestens einem manuellen Steuerelement (4) versehen ist, das zwischen einer Vielzahl von Positionen beweglich ist, die jeweils einer Vielzahl von Betriebszuständen des Schnellkochtopfs (1) entsprechen.

11. System nach Anspruch 10, **dadurch gekennzeichnet, dass** das Telekommunikationsmodul (11) einen dritten Detektor umfasst, der in der Lage ist, wenn das Telekommunikationsmodul (11) an dem Schnellkochtopf angebracht ist, ein drittes Signal zu erzeugen, das für die von dem manuellen Steuerelement (4) eingenommene Position repräsentativ ist, wobei das dritte Signal das Signal bildet oder in und/oder das Signal bezüglich des Betriebs des Schnellkochtopfes (1) aufgenommen wird.

12. System nach Anspruch 11, **dadurch gekennzeichnet, dass** der dritte Detektor eine erste Vielzahl von magnetoresistiven Sensoren enthält, während das manuelle Steuerelement (4) einen ersten magnetischen Aktivator enthält, der eingerichtet ist, um einen oder mehrere der magnetoresistiven Sensoren selektiv und aus der Ferne in Abhängigkeit von der Position des manuellen Steuerelements (4) zu erregen, wodurch die Position des letzteren kodiert wird.

13. System nach einem der Ansprüche 1 bis 12, **dadurch gekennzeichnet, dass** das Timer-Modul (12) einen Anzeigebildschirm (12A) enthält, der mindestens den Countdown der vorbestimmten Dauer anzeigt.

14. System nach den Ansprüchen 10 und 13, **dadurch gekennzeichnet, dass** das Timer-Modul (12) einen vierten Detektor umfasst, der in der Lage ist, wenn das Timer-Modul (12) an dem Schnellkochtopf (1) angebracht ist, ein viertes Signal zu erzeugen, das für die von dem manuellen Steuerelement (4) eingenommene Position repräsentativ ist, von dem aus das Timer-Modul auf dem Anzeigebildschirm Informationen anzeigt, die für die von dem manuellen Steuerelement (4) eingenommene Position repräsentativ sind.

15. System nach Anspruch 14, **dadurch gekennzeichnet, dass** der vierte Detektor eine zweite Vielzahl von magnetoresistiven Sensoren enthält, während das manuelle Steuerelement (4) einen zweiten magnetischen Aktivator einschließt, der eingerichtet ist, um einen oder mehrere der magnetoresistiven Sensoren selektiv und aus der Ferne in Abhängigkeit von der Position des manuellen Steuerelements (4) zu erregen, wodurch die Position kodiert wird.

16. System nach den Ansprüchen 12 und 15, **dadurch gekennzeichnet, dass** der erste und der zweite magnetische Aktivator miteinander verbunden sind.

17. System nach einem der Ansprüche 1 bis 16, **dadurch gekennzeichnet, dass** die drahtlose Verbindung eine Bluetooth®-Verbindung ist.

18. Haushaltskochverfahren für Nahrung mittels eines Schnellkochtopfes (1), der mit einem Druckregelventil versehen ist, das dazu eingerichtet ist, den im Schnellkochtopf herrschenden Druck im Wesentlichen auf einem Sollwert zu halten, **dadurch gekennzeichnet, dass** es einen Schritt umfasst, bei dem ein unabhängiges Telekommunikationsmodul (11) und ein unabhängiges Timer-Modul (12) abwechselnd lösbar an dem Schnellkochtopf (1) angebracht sind, wobei das Telekommunikationsmodul (11) in der Lage ist, wenn es an dem Schnellkochtopf (1) angebracht ist, mindestens ein Signal, das sich auf den Betrieb des Schnellkochtopfes (1) bezieht, über eine drahtlose Verbindung an ein unabhängiges Computer-Endgerät zu übertragen, während das Timer-Modul (12) in der Lage ist, wenn es an dem Schnellkochtopf (1) angebracht ist, eine vorbestimmte Dauer beginnend ab dem Zeitpunkt, in dem der in dem Schnellkochtopf (1) herrschende Druck den Sollwert im Wesentlichen zum ersten Mal erreicht, herunterzuzählen.

## Claims

1. A household food cooking system comprising a pressure cooker (1) provided with a pressure regulator valve designed to maintain the pressure prevailing in the pressure cooker (1) substantially at a setpoint value, said system being **characterised in that** it also comprises an independent telecommunications module (11) and an independent timer module (12), said pressure cooker (1), telecommunications module (11), and timer module (12) comprising complementary means for fastening (13A, 13B, 13C) making it possible to fasten the telecommunications module (11) and the timer module (12) to the pressure cooker (1) as alternatives and in removable manner, said telecommunications module (11) being capable, when it is fastened to the pressure cooker (1) of transmitting at least one signal relating to operation of said pressure cooker (1) to an independent computer terminal via a wireless link, while the timer module (12) is capable, when it is fastened to said pressure cooker (1), of counting down a predetermined time to be counted from the instant at which the pressure prevailing in the pressure cooker (1) substantially reaches the setpoint value for the first time.

2. System according to claim 1, **characterised in that** said means for fastening comprise a first connector (130B) incorporated in the telecommunications module (11), a second connector (130C) incorporated in the timer module (12), and a connection port (130A) incorporated in the pressure cooker (1), said connection port (130A) being designed to interact interchangeably with the first connector and with the second connector (130B, 130C) so as to couple the connection port (130A) mechanically and functionally respectively to the first connector or the second connector (130B, 130C).

3. System according to claim 2, **characterised in that** the pressure cooker (1) comprises a vessel (2) and a lid (3) that serves to be associated with the vessel (2) to form a cooking enclosure inside which the pressure can reach said setpoint value, said connection port (130A) being incorporated in said lid (3).

4. System according to claim 3, **characterised in that** the connection port (130A) is in the form of a recess provided in the surface of the lid (3), each of said telecommunications module (11) and timer module (12), having a shape substantially complementary to the shape of said recess, so that the recess can receive, in turn, the telecommunications module (11) and the timer module (12).

5. System according to one of claims 1 to 4, **characterised in that** said pressure cooker includes a steam escape duct (10), via which the regulator valve allows steam to escape whenever the pressure prevailing in the pressure cooker (1) exceeds the setpoint value.

6. System according to one of claims 1 to 5, **characterised in that** the telecommunications module (11) includes a first detector (15) that, when said telecommunications module (11) is fastened to said pressure cooker (1), is capable of producing a first signal that is representative of the pressure and/or of the temperature prevailing in the pressure cooker (1), said first signal forming, or being included in, and/or making it possible to obtain said signal relating to operation of said pressure cooker (1).

7. System according to claims 5 and 6, **characterised in that** said first detector (15) comprising a first temperature sensor (15A) designed to be disposed in and/or in the vicinity of the steam escape duct (10) when the telecommunications module (11) is fastened to the pressure cooker (1), in order to enable said first temperature sensor (15A) to sense the increase in temperature resulting from said steam escaping through the duct (10).

8. System according to one of claims 1 to 7, **characterised in that** the timer module (12) includes a second detector (16) that, when the timer module (12) is fastened to said pressure cooker (1), is capable of producing a second signal representative of the pressure and/or of the temperature prevailing in the pressure cooker (1), from which said timer module (12) is designed to determine the instant at which the pressure prevailing in the pressure cooker (1) substantially reaches said setpoint value for the first time.

9. System according to claims 5 and 8, **characterised in that** said second detector (16) comprises a second temperature sensor (16A) designed to be disposed in and/or in the vicinity of the steam escape duct (10) when said timer module (12) is fastened to said pressure cooker (1), in order to enable said second temperature sensor (16A) to sense the increase in temperature resulting from said steam escaping through the duct (10).

10. System according to one of claims 1 to 9, **characterised in that** said pressure cooker (1) is provided with at least one manual control member (4) that is mounted to move between a plurality of positions corresponding respectively to a plurality of operating states of said pressure cooker (1).

11. System according to claim 10, **characterised in that** said telecommunications module (11) comprises a third detector that, when said telecommunications module (11) is fastened to the pressure cooker, is capable of producing a third signal representative of the position taken up by the manual control member (4), the third signal forming, or being included in, and/or making it possible to obtain the signal relating to operation of said pressure cooker (1).

12. System according to claim 11, **characterised in that** said third detector includes a first plurality of magneto-resistive sensors, while the manual control member (4) incorporates a first magnetic activator designed to excite one or more of said magneto-resistive sensors selectively and remotely as a function of the position of the manual control member (4), in such a manner as thereby to code the position of the manual control member.

13. System according to one of claims 1 to 12, **characterised in that** said timer module (12) includes a display screen (12A) displaying at least said counting-down of the predetermined time.

14. System according to claims 10 and 13, **characterised in that** said timer module (12) includes a fourth detector that, when said time module (12) is fastened to the pressure cooker (1), is capable of producing a fourth signal that is representative of the position taken up by the manual control member (4), from which signal said timer module displays, on said display screen, information representative of the position taken up by the manual control member (4).

15. System according to claim 14, **characterised in that** said fourth detector includes a second plurality of magneto-resistive sensors, while the manual control member (4) incorporates a second magnetic activator designed to excite one or more of the magneto-resistive sensors selectively and remotely as a function of the position of the manual control member (4), in such a manner as thereby to code the position.

16. System according to claims 12 and 15, **characterised in that** said first and second magnetic activators are combined.

17. System according to claims 1 to 16, **characterised in that** said wireless link is a Bluetooth® connection.

18. A household method of cooking food by a pressure cooker (1) provided with a pressure regulator valve designed to maintain the pressure prevailing in the pressure cooker substantially at a setpoint value, **characterised in that** it includes a step in which an independent telecommunications module (11) and an independent timer module (12) are, in turn, fastened removably to said pressure cooker (1), said telecommunications module (11) being capable, when it is fastened to said pressure cooker (1), of transmitting at least one signal relating to operation of said pressure cooker (1) to an independent computer terminal via a wireless link, while said timer module (12) is capable, when it is fastened to the pressure cooker (1), of counting down a predetermined time to be counted from the instant at which the pressure prevailing in the pressure cooker (1) substantially reaches the setpoint value for the first time.
